(19) Europäisches Patentamt
European Patent Office
Office européen des brevets

(11) EP 3 599 487 A1

(12) EUROPEAN PATENT APPLICATION

(43) Date of publication:
29.01.2020 Bulletin 2020/05

(51) Int Cl.:
$G01V\ 1/00^{(2006.01)}$

(21) Application number: 18201199.9

(22) Date of filing: 18.10.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 24.07.2018 EP 18185133

(71) Applicant: Shell Internationale Research Maatschappij B.V.
2596 HR The Hague (NL)

(72) Inventor: KUVSHINOV, Boris Nikolaevich
1031 HW Amsterdam (NL)

(74) Representative: Shell Legal Services IP
PO Box 384
2501 CJ The Hague (NL)

(54) **SYSTEM AND METHOD FOR SEISMIC ACQUISITION**

(57)     A method for a seismic survey, comprising: providing a plurality of basic waveforms; generating, for a first vibratory source, a first combined signal formed by sequencing the plurality of basic waveforms in a first order derived from a Costas array; and generating, for a second vibratory source, a second combined signal formed by sequencing the plurality of basic waveforms in a second order derived from said Costas array, wherein the second order is different from the first order.

Fig. 1

**Description**

Technical Field

The present invention relates to acquiring seismic data using vibratory sources.

Background

In the oil and gas industry, geophysical prospecting techniques are commonly used to search for and evaluate subterranean hydrocarbon and/or other mineral deposits. A seismic energy source is used to generate a seismic wave that propagates into the earth and is at least partially reflected by subsurface seismic reflectors interfaces between subsurface formation layers having different acoustic impedances. The reflections are recorded by seismic receivers/sensors located at or near the surface of the earth, in a body of water, or at known depths in boreholes. The resulting seismic data may be processed by correlating it with a replica of the original signal to produce an impulse equivalent seismogram. Location of the subsurface reflectors and the physical properties of the formations may be determined thereby.

Various types of seismic energy sources have been used to impart seismic waves into the earth, including: 1) impulsive energy sources, and 2) seismic vibratory sources. A source of the first type is for example dynamite or a marine air gun. The second type employs one or more seismic vibrators (e.g., land or marine vibrators) as the energy source, wherein the vibrator is commonly used to propagate energy signals over an extended period of time (e.g., 10 seconds), as opposed to the near instantaneous energy provided by impulsive sources.

A seismic vibrator is employed as the source of seismic energy which, when energized, imparts relatively low-level energy signals into the earth. The source signal using this method was originally generated by an electric motor driving sets of counter-rotating eccentric weights, but these were later replaced by servo-controlled hydraulic vibrator or "shaker unit" mounted on a mobile base unit.

The impartation of energy with seismic vibrators is for a preselected energization interval, and data are recorded during the energization interval and a subsequent "listening" interval. It is desirable for the vibrator to radiate varying frequencies into the earth's crust during the energization interval. Vibrators introduces a user-specified band of frequencies, known as a sweep. In such instances, energy at a starting frequency is first imparted into the earth, and the vibration frequency changes during the energization interval at some rate until the stopping frequency is reached at the end of the interval. The difference between the starting and stopping frequencies of the sweep generator is known as the range of the sweep, and the length of time in which the generator sweeps through those frequencies is known as the sweep time. In a non-limiting example, the frequency can range from 5 Hz to 100 Hz. A vibrator can do upsweep that starts from a lower frequency or a downsweep that starts from a higher frequency.

The use of multiple seismic energy sources may be advantageous, e.g., in allowing for a survey plan with a given number of shot points to be completed in a shorter period of time than would be possible using a single source. However, the use of multiple sources may lead to complications in data processing. For example, at least one sensor node may receive seismic energy originating from multiple sources at the same time, resulting in "blended" data. Such sources are herein referred to as "simultaneous sources", and a survey where this occurs may be referred to as a "simultaneous shooting" survey. Note that while the term "simultaneous" is used, it does not mean the actuation of sources have to be precisely simultaneous. In the context of this application, "simultaneous" means sources are fired closely enough together in time that a sensor node will receive a signal that for at least some period of time represents seismic data caused by both shots. As an example, the paper by J.P. Pecholcs et al., "Over 40000 vibrator points per day with real-time quality control: opportunities and challenge", 80th International Annual Meeting, SEG, Expanded Abstracts, vol. 29, pp. 111-115 (2010) describes a test survey with 24 vibrators that work simultaneously.

The challenge is to recover signals generated by each individual source from the blended (combined) signal generated by all the simultaneous sources. This may also be referred to as "deblending".

There are mainly three types of approaches to this challenge when vibrators are used. The first type decreases the interference between sources (vibrators) by reducing the overlap of their sweeps in space or time. This is achieved by increasing the distances between the sources (J.Bouska, "Distance separated simultaneous sweeping, for fast, clean, vibroseis acquisition", The Leading Edge, vol. 27, pp. 924 - 938 (2008)), or by increasing time intervals between the moments in time when different sources are triggered (e.g. the slip-sweep technique described by H.J. Rozemond in "Slip-sweep acquisition", 66th SEG meeting, 1996). According to some approaches of the second type, sources are made distinctive from their shooting patterns over multiple firing points. For this purpose the sources can be dithered in time relative to one another, or the phases of their signals can vary form point to point (see e.g., US Patent 5721710 "High fidelity vibratory source seismic method with source separation" (1998) by J.J.Sallas, D. Corrigan, and K.P. Allen). According to some approaches of the third type, each source generates a signal, the individual waveform of which is clearly distinguishable from waveforms emitted by all other sources. In this case the sources can be separated on a shot-to-shot basis, even if they work close to each other and their signals almost fully overlap in time.

There is need to improve approaches of the third type in one or more of the following aspects: correlation properties of the sweeps, waveform smoothness of the sweeps, and seismic energy injected into the subsurface.

Summary of the Invention

In an aspect of the invention, there is provided a method for a seismic survey, comprising: providing a plurality of basic waveforms; generating, for a first vibratory source, a first combined signal formed by sequencing the plurality of basic waveforms in a first order derived from a Costas array; and generating, for a second vibratory source, a second combined signal formed by sequencing the plurality of basic waveforms in a second order derived from said Costas array, wherein the second order is different from the first order.

In another aspect of the invention, there is provided a system for generating sweeps for a seismic survey using a plurality of basic waveforms, the system comprising: a first vibratory source provided with a first combined signal formed by sequencing the plurality of basic waveforms in a first order derived from a Costas array; and a second vibratory source provided with a second combined signal formed by sequencing the plurality of basic waveforms in a second order derived from said Costas array, wherein the second order is different from the first order.

Brief Description of Drawings

The invention will be described herein below in more detail, and by way of example, with reference to the accompanying drawings in which:

Fig. 1 illustrates a group of plurality of vibratory sources where the present invention can be applied.
Fig. 2 illustrates an exemplary Costas array that can be used in the present invention.
Fig. 3A illustrates a Costas array formed by adding an empty column to the Costas array in Fig. 2.
Fig. 3B illustrates right side of equation (5) calculated for different values of p and q.
Figs. 4-7 illustrate properties of combined signals.
Fig. 8 shows the maximum amplitudes of the pairwise cross-correlations of signals divided by the maximum amplitude of the auto-correlations.
Fig. 9 illustrates a typical pair-wise cross-correlation of two signals as a function of time.

In the drawings, similar reference signs refer to similar/equivalent components, steps or features.

Detailed Description of Embodiments

As mentioned, productivity of seismic data acquisition can be increased using multiple sources that work simultaneously. Designing sweeps for simultaneous sources is in fact a multi-objective optimization Problem. On one hand, pairwise cross-correlation between sweeps from different sources should be minimized. On the other hand, the sweeps should have good auto-correlation properties and generate a relatively high seismic energy.

The major difficulty in designing sweeps for simultaneous vibrators is that these two requirements contradict each other. It is clear that a pair of conventional linear upsweep and downsweep satisfy this criteria and can be used to separate two sources. However, the industry is more interested in separation of more sources.

The present invention relates to a system and method for generating a set of quasi-orthogonal seismic sweeps. The system and method may have the following advantages: 1) sweeps designed based on a Costas array allow more seismic vibrators to work simultaneously; 2) the sweeps can inject greater seismic power into the Earth; 2) the sweeps are smooth and do not have sharp jumps, and hence are more practical and easier to generate by vibrators; and 3) the sweeps have improved correlation properties.

A Costas array can be viewed as an $m \times n$ array (matrix), each element or entry of which, $a_{m,n}$, is either 1, for a point (or dot), or 0, for the absence of a point. Costas arrays have such a property that each row or column contains only one point (or only one "1" if considered as a $m \times n$ matrix of numbers). In other words, for each $i,j,p$ and $q$, there are not more than two elements $a_{i,j}$ and $a_{i+p,j+q}$ such as both $a_{i,j}$ and $a_{i+p,j+q}$ are equal to 1. This property can be expressed in the form of inequality as below:

$$\sum_{i,j} a_{i,j}\, a_{i+p,j+q} \leq 1 \qquad (1)$$

where the sum given by expression (1) is called the correlation function.

This property of Costas arrays has a simple geometric interpretation. For each non-zero element $a_{i,j}$ of a Costas matrix $a_{m,n}$, one plots a point in a two-dimensional plane (x,y), with coordinates x=i,y=j, two-dimensional vectors connecting any pair of these points are all different.

In this disclosure, it is proposed to generate seismic sweeps using Costas arrays.

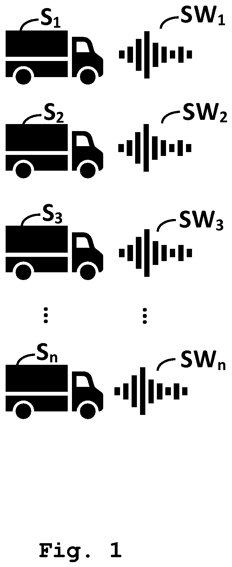

Fig. 1 illustrates a group of vibratory sources for seismic acquisition, $S_1$, ..., $S_n$. These sources emit sweeps (herein also referred to as seismic signals) $SW_1$,..., $SW_n$, respectively. Take SW1 as an example, it can be divided into/formed by basic waveforms of equal duration $\tau$. In an example, each basic waveform is a monochromatic signal with frequency $f_j = f_0 + j\,\Delta f$, where $f_0$ is a selected and fixed frequency and $\Delta f$ is a fixed frequency jump. Distribution of frequencies over the time intervals can be represented by an array (i.e., a matrix) $a_{M,N}$. Element $a_{m,n}$ in this array is equal to 1 if frequency $f_n$ is emitted in the m-th time interval. Otherwise $a_{m,n}$ is equal to 0. If basic waveforms with frequencies $f_j$ are emitted in a sequence following a Costas array pattern, matrix $a_{M,N}$ becomes a Costas array, and the signal can benefit from properties of Costas arrays.

It has been observed that basic waveforms forming a sweep do not need to be monochromatic signals. That is to say, one or more basic waveforms may change its frequency during its respective duration $\tau$. One can build a sweep using any plurality of basic waveforms that have low pairwise cross-correlations. In that case, symbols $f_j$ are viewed as labels for such basic waveforms. A basic waveform can be formed in different ways. In an example, one may divide a conventional upsweep or downsweep into multiple segments and each segment is taken as a basic waveform. In that case, one need to decide in which order the segments (basic waveforms) shall be arranged, which question can be answered by the present disclosure.

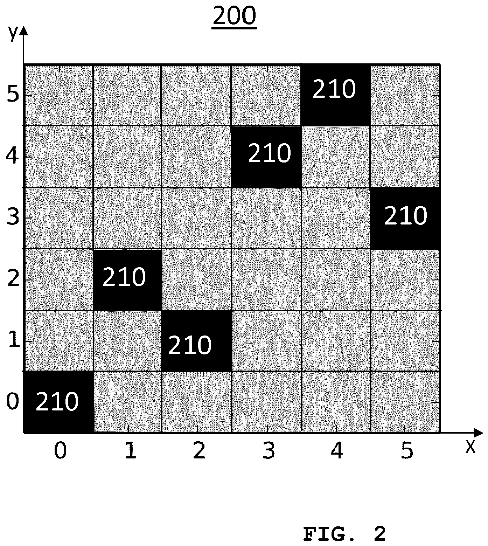

In the following we will describe how to design a seismic sweep (e.g., a pilot signal of a vibrator) using a Costas array and a plurality of basic waveforms. Fig. 2 illustrates a Costas array, wherein the x-axis indicates time and the y-axis indicates frequency. One can use the array shown in Fig. 1 to derive an expression of a sweep, expressed by a sequence of basic waveforms arranged in the follow order in which they are emitted:

$$f_p^{(0)} = f_0,\quad f_2,\quad f_1,\quad f_4,\quad f_5,\quad f_3 \quad (2)$$

meaning a basic waveform of frequency $f_0$ is emitted in time interval #0 (see element 110 with coordinates (0,0)), a basic waveform of frequency $f_2$ is emitted in time interval #1 (see element 110 with coordinates (1,2)), a basic waveform of frequency $f_4$ is emitted in time interval #3 (see element 110 with coordinates (3,4)), a basic waveform of frequency $f_5$ is emitted in time internal #4 (see element 110 with coordinates (4,5)), and a basic waveform of frequency $f_3$ is emitted in time interval #5 (see element 110 with coordinates (5,3). As mentioned, the basic waveforms do not have to be monochromatic. In that case, expression (2) and Fig. 2 indicate that basic waveform with label $f_0$ is emitted first, followed by basic waveform with label f2, and basic waveform with label $f_3$ is the last one.

Now we frequency-shift the sweep of expression (2) by k·$\Delta$f, i.e., an integer number k of frequency jump $\Delta f$, and we get a shifted sweep $f_p^{(k)}$:

$$f_p^{(k)} = f_{0+k},\, f_{2+k},\, f_{1+k},\, f_{4+k},\, f_{5+k},\, f_{3+k} \quad (3)$$

If k=1, then $f_p^{(1)} = f_1, f_3, f_2, f_5, f_6, f_4$. Considering two natural numbers k and q, where $k \neq q$, sequences $f_p^{(k)}$ and $f_p^{(q)}$ will not emit the same frequency in more than one time intervals because of the properties of Costas arrays, i.e., equation $f_{p+s}^{(k)} = f_p^{(q)}$ can be satisfied at most once for any $k \neq q$. Sweeps formed by sequences $f_p^{(k)}$ and $f_p^{(q)}$ with unequal k and q therefore have low cross-correlation.

One can generate more sweeps that meet the above-mentioned requirements by applying additional unequal shift values, in order to support more sources.

Preferably, generating sweeps for simultaneous sources shall use a relatively small number of basic waveforms. This can be done using cyclic Costas arrays. Cyclic Costas arrays possess a property that is similar to equation (1) and can be written as follows:

$$\sum_{i,j} a_{i,j}\, a_{i+p,\,mod(j+q,N)} \leq 1 \quad (4)$$

where the notation mod($k,N$) indicates that the number $k$ is taken modulo $N$ (i.e. we take the remainder of division of $k$ by $N$) and $N$ is the dimensions of the Costas array in the y-direction. If a cyclic Costas array is used to build pilot signals, the basic waveforms in sequences $f_p^{(k)}$ are shifted cyclically, so that one can build $N$ signals with low cross-correlation using only $N$ basic waveforms.

Reference is made to Fig. 2 again to describe how to define sequences of basic waveforms using a cyclic Costas array. Assuming the array 200 is periodic in the y-direction, hence, starting from the sequence of basic waveforms

$f_p(0) = f_0,f_2,f_1,f_4,f_5,f_3$, one can determine other sequences by shifting cyclically the basic waveforms in the sequence $f_p(0)$. In an example, sequence $f_p(0)$ is shifted by unity (i.e., by $1 \cdot \Delta f$), thereby forming a new sequence $f_p(1)= f_1,f_3,f_2,f_5,f_0,f_4$. Note if the Costas array is not cyclic, in sequence $f_p(1)$, the fifth element will need to be $f_6$, meaning one more basic waveform are needed. One would appreciate that by applying a greater shift value, even more basic waveforms will be needed. By applying a cyclic Costas array, the same number of sweeps can be generated with relatively smaller number of basic waveforms. As a result, the following sequences can be defined as shifts of $f_p(0)$:

$$f_p{}^{(1)} = f_1 , f_3 , f_2 , f_5 , f_0 , f_4$$

$$f_p{}^{(2)} = f_2 , f_4 , f_3 , f_0 , f_1 , f_5$$

$$f_p{}^{(3)} = f_3 , f_5 , f_4 , f_1 , f_2 , f_0$$

$$f_p{}^{(4)} = f_4 , f_0 , f_5 , f_2 , f_3 , f_1$$

$$f_p{}^{(5)} = f_5 , f_1 , f_0 , f_3 , f_4 , f_2$$

In this way, 6 sweeps represented by sequences $f_p(0),f_p(1), f_p(2),f_p(3),f_p(4),f_p(5)$ can be generated by using only 6 basic waveforms $f_0$, $f_1$, $f_2$, $f_3$, $f_4$ and $f_5$.

The x-axis and y-axis in a Costas array can be interchanged, so that the x-axis indicates frequency and the y-axis indicates time. With such an interpretation, a sweep derived from array 200 in Fig. 2 will be formed by a sequence of consecutive basic waveforms expressed as follows: $f_p(0)= f_0,f_2,f_1,f_5,f_3,f_4$.

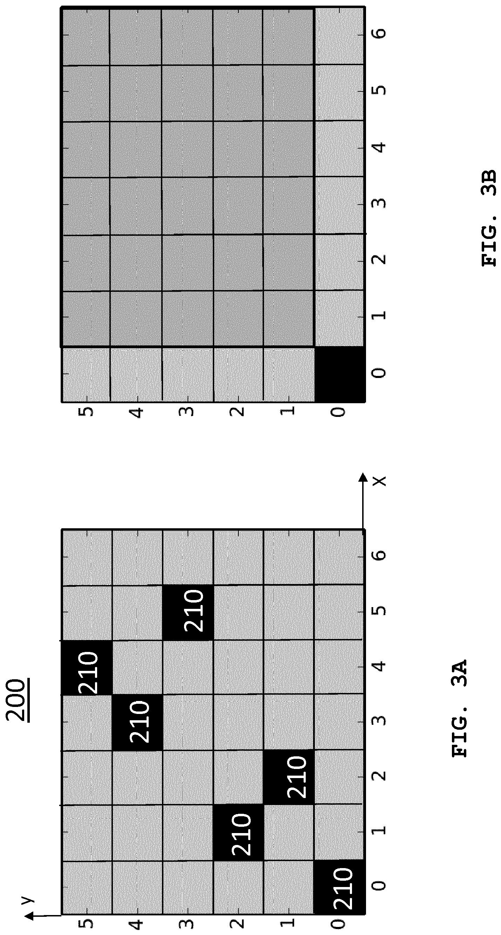

Preferably, doubly-cyclic Costas arrays can be used to generate sweeps. By adding an empty column to array 200 in Fig. 2, a doubly-cyclic Costas array 300 is obtained, as shown in Fig. 3A. Doubly-cyclic Costas arrays have the following property:

$$\sum_{i,j} a_{i,j}\, a_{mod(i+p,M),mod(j+q,N)} \leq 1 \quad (5)$$

where $M$ is the dimension of the array along the x-axis, $N$ is the dimension of the array along the y-axis. In Costas array 300, $M = 7$ and $N = 6$.

Figs. 3A and 3B illustrate the right side of expression (5) calculated for different values of $p$ and $q$. It is equal to 0 if either $p = 0$ or $q = 0$ and is equal to 1 in all cyclically without essential delays between consecutive cycles. In this case the sequence $f_p(0)$ will consist of cyclically emitted waveforms $f_0,f_2,f_1,f_5,f_3,f_4,*,f_0,f_2,f_1$ ..., where the star "*" denotes the time interval where no signal is emitted. The other sequences are built in the same way as in the above example. Those skilled in the art should appreciate that the waveforms emitted in consecutive cycles do not interfere each other if the time difference between the starts of these cycles is larger than the listening time. The described sweeps emit signals almost continuously, and hence they allow to inject more energy in the subsurface. These sweeps might be used in particular in marine seismic acquisition.

Those skilled in the art should be able to design a set of waveforms with relatively low pairwise cross-correlations, which can be used as basic waveforms of the described construction of pilot signals. As an example one can specify basic waveforms as trigonometric functions, as follows:

$$f_j(t) = \pm \sin\left[\pi\,(j+1)\,\frac{t}{\tau}\right], \; f_j(t) = \pm cos\left[\pi\,(j+1)\,\frac{t}{\tau}\right] \quad (6)$$

or

$$f_j(t) = \pm \sin\left[2\pi\,(j+1)\,\frac{t}{\tau}\right], \quad f_j(t) = \pm cos\left[2\pi\,(j+1)\,\frac{t}{\tau}\right] \quad (7)$$

where $\tau$ is the duration of a basic waveform, j=0,1,...,M-1 and M is the number of basic waveforms. Here, we assume the durations $\tau$ are the same for all $f_j(t)$ although in practice these durations might be different. Expression (6) indicates that each basic waveform an integer number of half-periods. Equation (7) indicates that each basic waveform contains an integer number of full oscillation periods. Pairwise cross-correlation of these basic waveforms are relatively low. Notice that the basic waveforms given by expressions (6) and (7) are not monochromatic. According to the time-frequency uncertainty principle, an oscillation possesses a unique frequency only if the oscillation time is infinitely large, so that infinitely many periods of oscillations are realized during emission of the signal. The waveforms considered oscillate during relative shot periods of time $\tau$, and hence the have extended Fourier spectra, bandwidth of which is about $1/\tau$.

Sine-like basic waveforms vanish at the end of the intervals $\tau$. Joining such basic waveforms in a combined signal ensures the continuity of the signal. The signal derivative has jumps at points where the waveforms are joined. In some embodiments, sweeps emitted by each of the simultaneous sources have a sinusoidal form at any moment in time. The amplitude of sweeps remains constant and it is the same as in the case where sources emit conventional linear sweeps (also referred to as "chirps"). Consequently, the seismic energy emitted by the sources can also be the same as in the case of chirps. In contrast to chirps, the frequency of the sweeps designed does not change linearly with time but varies in a prescribed way following a Costas array pattern. Each source may emit a full frequency bandwidth typical for seismic acquisition (e.g., between about 5 Hz and about 90 Hz), which provides the sweeps with good auto-correlation properties. The Costas array pattern minimizes the overlap between the frequency bands emitted by the sources at any particular moment of time, which provides a low cross-talk. According to an embodiment of the invention, sweeps for 20 - 30 simultaneous sources can be designed. The separation level of the sources is about 20 dB. The auto-correlation properties of the sweep and the emitted seismic energy are comparable to the case where conventional linear sweeps are used.

Cosine-like basic waveforms are equal to $\pm1$ at the end of the intervals $\tau$. Joining such waveforms in a combined signal and choosing the sign of $f_j(t)$ appropriately, one builds a sweep that is continuous and also has a continuous derivative everywhere. The second derivative of the signal has jumps at points where waveforms are joined.

Using cosine-like basic waveforms requires additional care, because the signal to be emitted should be equal to zero at its starting and ending points. This could be achieved by tapering the combined signal. Another possibility is to use a doubly-cyclic Costas array to design the signal. In this case one can cyclically shift the combined signal so that its zero point is placed at it start and end. Since the combined signals have multiple points where its amplitude is equal to zero, one can place any of them at the start and at the end of the sweep. It might be preferable to choose such zero point, where the amplitude of the sweep has the lowest possible absolute value of its time derivative, which makes it easier for a seismic vibrator to generate the signal.

In an example, we consider a set of 23 sweeps designed for 23 vibrators. These sweeps are built by joining cosine-like basic waveforms with integer periods, which are presented in the second part of expression (7). We use a doubly-cyclic Costas array with dimensions 23×22. This array is built using the Welch construction, and similarly to the array shown in Fig. 3A, it has an empty column. We interpret the y-axis as time and the x-axis as the index (or label) of basic waveforms. We use 23 basic waveforms that are distributed over 22 equal time intervals $\tau$, where $\tau$ =0.24 second. The indices of the basic waveforms in the sequence that forms the first sweep (pilot signal) are given by the equation below:

$$p^{(0)} = 0, 2, 16, 4, 1, 18, 19, 6, 10, 3, 9, 20, 14, 21, 17, 8, 7, 12, 15, 5, 13, 11 \quad (8)$$

The amplitude of the pilot signal is proportional to the pressure applied by the vibrator to the earth. By shifting the indices in equation (8) cyclically modulo 23, we build another 22 sequences of basic waveforms that are used to build other 22 pilot signals. The sequences of indices in the waveforms that are obtained by shifting sequence (8) by 1 unit and by 2 units are given respectively by the following equations:

$$p^{(1)} = 1, 3, 17, 5, 2, 19, 20, 7, 11, 4, 10, 21, 15, 22, 18, 9, 8, 13, 16, 6, 14, 12 \quad (9)$$

$$p^{(2)} = 2, 4, 18, 6, 3, 20, 21, 8, 12, 5, 11, 22, 16, 0, 19, 10, 9, 14, 17, 7, 15, 13 \quad (10)$$

By shifting sequence (5) by $k$ units with $k$ = 3,...22, we can obtain the other sequences similarly, such as

$$p^{(3)} = 3, 5, 19, 7, 4, 21, 22, 9, 13, 6, 12, 0, 17, 1, 20, 11, 10, 15, 18, 8, 16, 14 \quad (11)$$

As a result, we have 23 pilot signals each of which is a total duration of about 5.3 seconds. Then we cyclically shift the above sequences in time, so that their starting and ending points are located near the zero point of the waveform with that has the lowest number of periods per interval $\tau$.

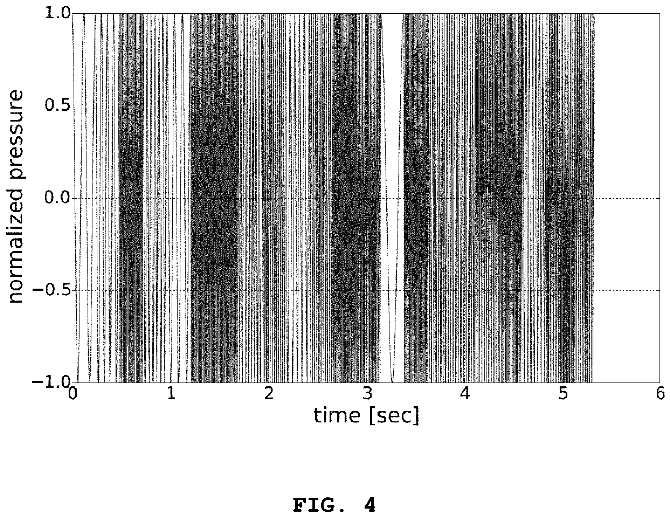

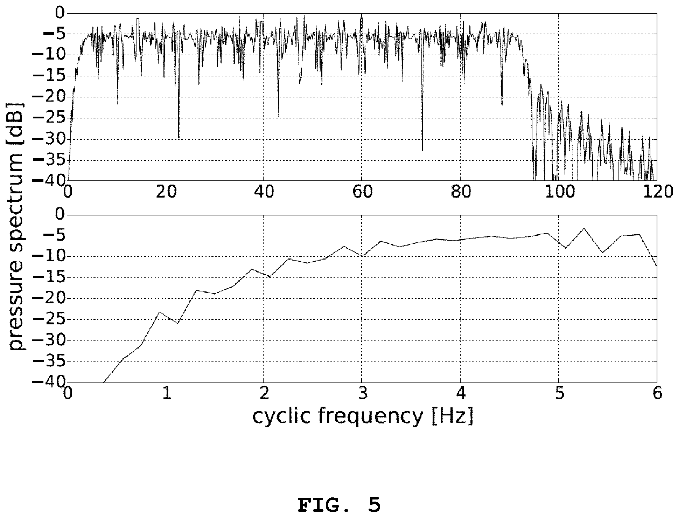

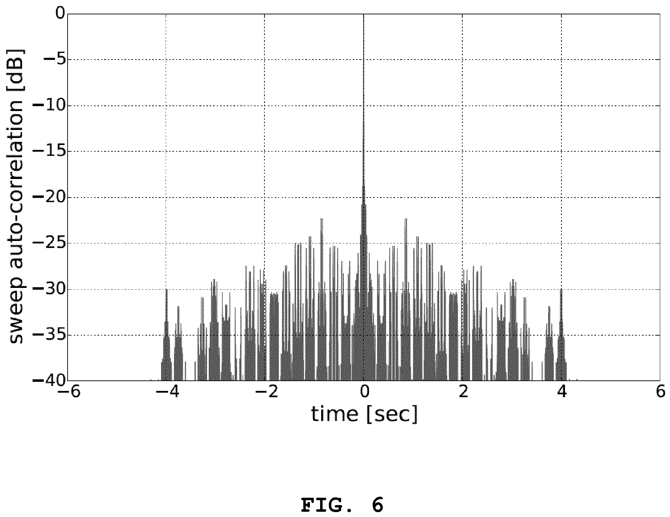

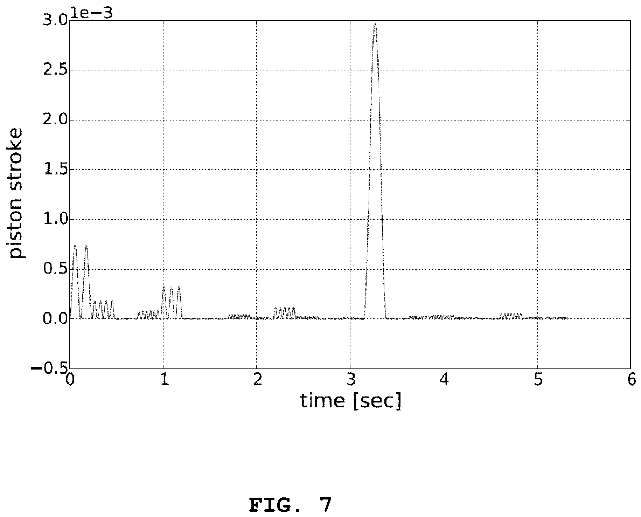

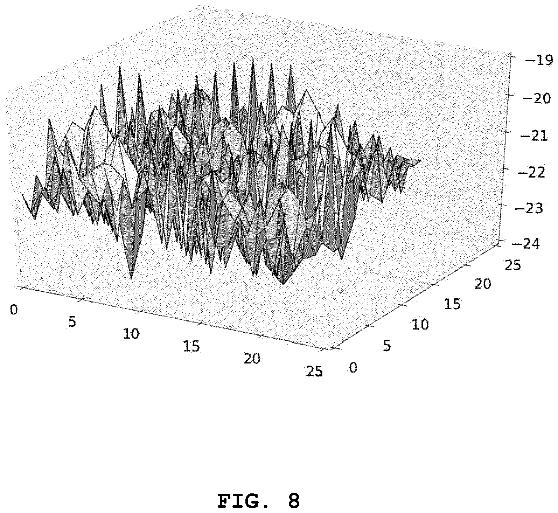

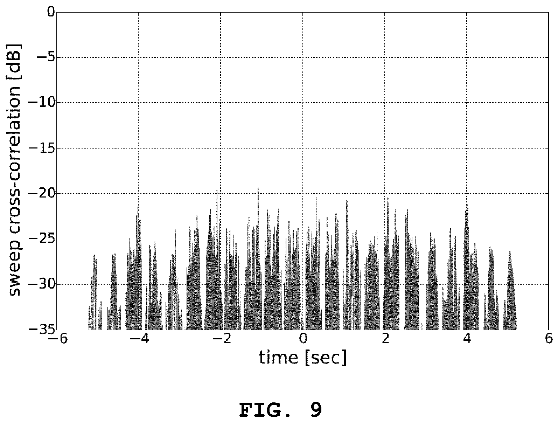

Figs. 4 - 7 illustrate properties of the above combined signals. From those figures we can see the signal amplitude (normalized pressure), the signal frequency spectrum, the signal auto-correlation, and the second integral of the signal amplitude (normalized piston stroke) for the signal that contain the sequence of basic waveforms given by equation (8). Fig. 8 shows the maximum amplitudes of the pairwise cross-correlations of the signals divided by the maximum amplitude of the auto-correlations. One can see that the proposed design separates the signals by about 20 dB. A typical pair-wise cross-correlation of two signals as a function of time is shown in Fig. 9.

Similarly one can design signals using sine- or cosine-like basic waveforms with integer number of half-periods. By using such waveforms one can reduce duration of interval $\tau$. This allows to reduce the sweep time, and/or to increase the number of basic waveforms emitted in a combined signal with a given duration, which results in an overall decrease of the pairwise cross-correlations between the signals that emit different sequences of waveforms. It turns out however, that the cross-correlations of "neighboring" sequences, i.e. such sequences whose basic waveforms are shifted by one unit (one half-period) with respect to each other is relatively large compared to pairwise cross-correlations between other signals. One can separate such signals, for example, by placing sources emitting "neighboring" sequences at some distance from each other. In particular, one can split sources in two groups - sources that emit sequences of basic waveforms with even number of half-periods and sources that emit sequences of basic waveforms with odd number of half-periods and execute a seismic survey where these two groups work at some distance from each other.

Notice that the purpose of above examples is to provide illustration of some of preferred embodiments of this invention, and which should not be construed as limiting the scope of the invention.

## Claims

1. A method for a seismic survey, comprising:

   providing a plurality of basic waveforms;
   generating, for a first vibratory source, a first combined signal formed by sequencing the plurality of basic waveforms in a first order derived from a Costas array; and
   generating, for a second vibratory source, a second combined signal formed by sequencing the plurality of basic waveforms in a second order derived from said Costas array, wherein the second order is different from the first order.

2. The method of claim 1, wherein the second combined signal is formed by shifting the basic waveforms in the first sweep by one or more units.

3. The method of claim 2, wherein the second sweep is formed by cyclically shifting the basic waveforms in the first sweep by one or more units.

4. The method of claim 2 or 3, wherein the step of providing a plurality of basic waveforms comprising:

   providing n basic waveforms $f_p$, where p=0, 1, ..., n-1,
   wherein the second combined signal is generated by replacing every basic waveform $f_p$ in the first combined signal by basic waveform $f_{p+d}$, where d is a positive integer.

5. The method of any one of claims 1-4, further comprising:

   generating a first sweep for the first vibratory source by choosing a zero point of the first combined signal as a starting point of the first sweep, and choosing another zero point of the first combined signal as an ending point of the first sweep, and
   generating a second sweep for the second vibratory source by choosing a zero point of the second combined signal as a starting point of the second sweep and choosing another zero point of the second combined signal as an ending point of the second sweep.

6. The method of claim 5, wherein for one or more of the first sweep and the second sweep, the zero points are chosen to lower a time derivative of an absolute value of an amplitude of the sweep.

7. The method of any one of claims 1-6, wherein in one or more of the first combined signal and the second combined signal, the basic waveforms are sequenced in such a way that the combined signal is continuous.

8. The method of claim 7, wherein in one or more of the first combined signal and the second combined signal, the basic waveforms are sequenced in such a way that a derivative of the combined signal is continuous.

9. The method of any one of claims 1-8, wherein the basic waveforms have sinusoidal shapes.

10. The method of claim 9, wherein each of the basic waveforms includes an integer number of oscillation's half-periods.

11. The method of claim 9 or 10, wherein the basic waveforms are arranged in such a way that in one or more of the first combined signal and the second combined signal,
adjacent basic waveforms are matched at points where they are equal to zero,
and/or
adjacent basic waveforms are matched without jumps at points where they are equal to +1 or -1.

12. The method of any one of claims 1-11, wherein a plurality of sources are used, and the plurality of sources are divided into more than one groups in such a way that -
if a combined signal generated for one source is formed by basic waveforms that are shifted by one unit with respect to those basic waveforms forming another combined signal generated for another source, the two sources are divided into different groups,
wherein the groups are configured to work a distance from each other.

13. The method of claim 12, wherein the plurality of sources are divided into a first group and a second group, sources in the first group are provided with combined signals formed by sequencing even number of half-periods, and sources in the second group are provided with combined signals formed by sequencing odd number of half-periods, the two groups work at a distance from each other.

14. A system for generating sweeps for seismic survey using a plurality of basic waveforms, the system comprising:

a first vibratory source provided with a first combined signal formed by sequencing the plurality of basic waveforms in a first order derived from a Costas array; and
a second vibratory source provided with a second combined signal formed by sequencing the plurality of basic waveforms in a second order derived from said Costas array, wherein the second order is different from the first order.

Fig. 1

200

FIG. 2

EP 3 599 487 A1

## 200

**FIG. 3A**

**FIG. 3B**

FIG. 4

FIG. 5

FIG. 6

**FIG. 7**

FIG. 8

FIG. 9

Europäisches
Patentamt

European
Patent Office

Office européen
des brevets

# EUROPEAN SEARCH REPORT

Application Number

EP 18 20 1199

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2016/055826 A1 (CGG SERVICES SA [FR]) 14 April 2016 (2016-04-14) <br> * abstract * <br> * paragraph [0006] * <br> * paragraph [0009] - paragraph [0010] * <br> * paragraph [0047] - paragraph [0048] * <br> * paragraph [0057] * <br> * paragraph [0061] * <br> * paragraph [0069] - paragraph [0070] * <br> ----- | 1-14 | INV. <br> G01V1/00 |
| Y <br><br> A | WO 2016/009270 A1 (CGG SERVICES SA [FR]) 21 January 2016 (2016-01-21) <br> * abstract * <br> * paragraph [0014] * <br> * paragraph [0060] - paragraph [0062] * <br> ----- | 1,4-6, 9-14 <br><br> 2,3,7,8 | |
| A | PECKNOLD S P ET AL: "Improved Active Sonar Performance Using Costas Waveforms", IEEE JOURNAL OF OCEANIC ENGINEERING, IEEE SERVICE CENTER, PISCATAWAY, NJ, US, vol. 34, no. 4, 1 October 2009 (2009-10-01), pages 559-574, XP011282869, ISSN: 0364-9059, DOI: 10.1109/JOE.2009.2024799 <br> * the whole document * <br> ----- | 1-14 | |
| Y <br><br> A | WO 2015/061636 A1 (WESTERNGECO LLC [US]; SCHLUMBERGER CA LTD [CA] ET AL.) 30 April 2015 (2015-04-30) <br> * abstract * <br> * paragraph [0004] - paragraph [0007] * <br> * paragraph [0039] - paragraph [0045] * <br> ----- <br> -/-- | 7,8 <br><br> 1-6,9-14 | |

| | | | TECHNICAL FIELDS SEARCHED (IPC) |
|---|---|---|---|
| | | | G01V |

The present search report has been drawn up for all claims

| Place of search | Date of completion of the search | Examiner |
|---|---|---|
| The Hague | 15 April 2019 | Hustedt, Bernhard |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.....................................................................
& : member of the same patent family, corresponding
    document

EPO FORM 1503 03.82 (P04C01)

page 1 of 2

Europäisches
Patentamt

European
Patent Office

Office européen
des brevets

## EUROPEAN SEARCH REPORT

Application Number

EP 18 20 1199

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2015/028411 A1 (SHELL INT RESEARCH [NL]; SHELL OIL CO [US]) 5 March 2015 (2015-03-05) | 2,3 | |
| A | * abstract * <br> * figures 1-6 * <br> * page 2, line 24 - page 3, line 7 * <br> * page 6, line 4 - line 23 * <br> * page 6, line 30 - page 8, line 2 * <br> * page 15, line 28 - page 17, line 16 * <br> ----- | 1,4-14 | |

TECHNICAL FIELDS
SEARCHED      (IPC)

The present search report has been drawn up for all claims

| Place of search | Date of completion of the search | Examiner |
|---|---|---|
| The Hague | 15 April 2019 | Hustedt, Bernhard |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 18 20 1199

This annex lists the patent family members relating to the patent documents cited in the above-mentioned European search report.
The members are as contained in the European Patent Office EDP file on
The European Patent Office is in no way liable for these particulars which are merely given for the purpose of information.

15-04-2019

| Patent document cited in search report | | Publication date | Patent family member(s) | | Publication date |
|---|---|---|---|---|---|
| WO 2016055826 | A1 | 14-04-2016 | NONE | | |
| WO 2016009270 | A1 | 21-01-2016 | AU | 2015291300 A1 | 02-02-2017 |
| | | | EP | 3170028 A1 | 24-05-2017 |
| | | | US | 2017160415 A1 | 08-06-2017 |
| | | | WO | 2016009270 A1 | 21-01-2016 |
| WO 2015061636 | A1 | 30-04-2015 | US | 2015117150 A1 | 30-04-2015 |
| | | | WO | 2015061636 A1 | 30-04-2015 |
| WO 2015028411 | A1 | 05-03-2015 | AU | 2014314344 A1 | 18-02-2016 |
| | | | EP | 3039457 A1 | 06-07-2016 |
| | | | US | 2016209529 A1 | 21-07-2016 |
| | | | WO | 2015028411 A1 | 05-03-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5721710 A

**Non-patent literature cited in the description**

- **J.P. PECHOLCS et al.** Over 40000 vibrator points per day with real-time quality control: opportunities and challenge. *80th International Annual Meeting, SEG, Expanded Abstracts,* 2010, vol. 29, 111-115
- **J.BOUSKA.** Distance separated simultaneous sweeping, for fast, clean, vibroseis acquisition. *The Leading Edge,* 2008, vol. 27, 924-938
- **H.J. ROZEMOND.** Slip-sweep acquisition. *66th SEG meeting,* 1996